(19) Europäisches Patentamt

European Patent Office

Office européen des brevets

(11) Numéro de publication: **0 022 759**
**A1**

(12) **DEMANDE DE BREVET EUROPEEN**

(21) Numéro de dépôt: **80870009.0**

(22) Date de dépôt: **11.02.80**

(51) Int. Cl.³: **F 16 M 11/10,** H 04 R 1/02, F 16 M 13/02

(30) Priorité: **17.07.79 EP 79870018**

(71) Demandeur: **Huys, Werner, 215 Boulevard Sylvain Dupuis, B-1070 Bruxelles (BE)**

(43) Date de publication de la demande: **21.01.81 Bulletin 81/3**

(72) Inventeur: **Huys, Werner, 215 Boulevard Sylvain Dupuis, B-1070 Bruxelles (BE)**

(84) Etats contractants désignés: **AT BE CH DE FR GB IT LU NL SE**

(74) Mandataire: **Heremans, Didier, 27 Avenue du Lac, B-1320 Genval (BE)**

(54) Console pour enceinte acoustique.

(57) Il s'agit d'une console pour enceinte acoustique, constituée de deux éléments identiques (1), qui, une fois assemblés, par conjugaison de deux formes demi-cylindriques (3)
permettent la surélévation et l'inclinaison de l'enceinte
acoustique.

EP 0 022 759 A1

ACTORUM AG

CONCERNE : DEPOT DE BREVET ET DE DESSIN

OBJET     : CONSOLE POUR ENCEINTE

FORME :

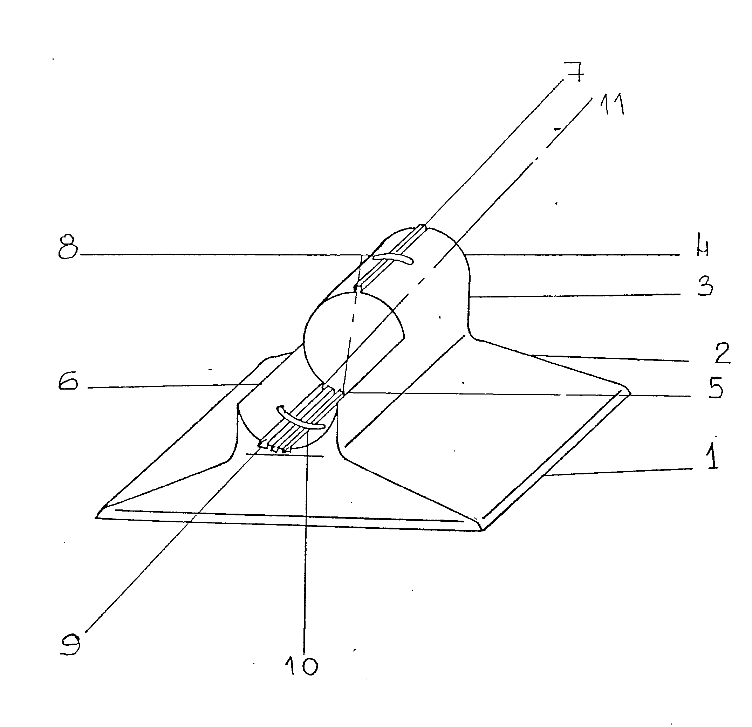

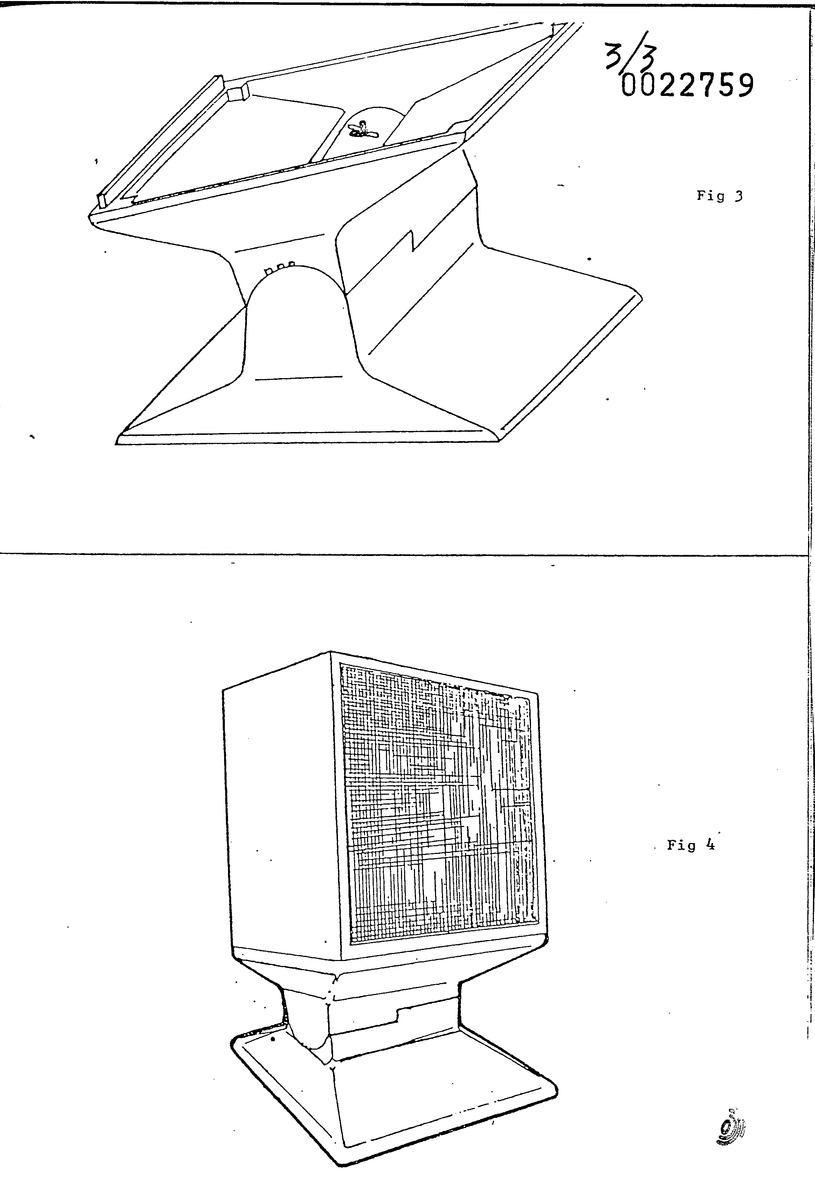

Constituée de deux éléments identiques 12 et 13 suivant Fig 1.
une fois assemblés suivant Fig 2 et Fig 3 permettent la surélévation de l'enceinte suivant Fig 4.

PRINCIPE :

Principe général

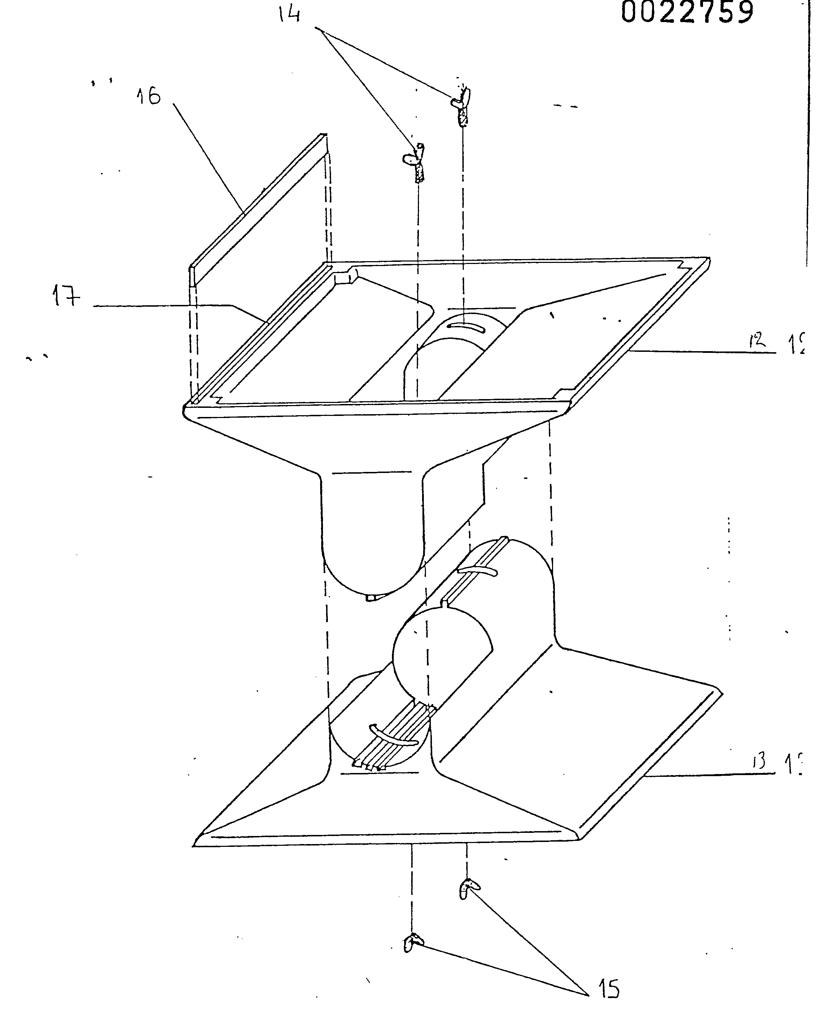

Par conjugaison de deux formes demi cylindriques 3 et 5, l'une
concave 6, l'autre convexe 4, et ayant pour centre le même point
11, nous obtenons une rotation de cet ensemble.
Par superposition suivant Fig 2 de ces demi formes, il est
possible d'obtenir une rotation modulée du déplacement angulaire.

CRANTAGE :

Sur la partie concave 6 se trouvent trois rainures 9 parallèles
et espacées. Sur la partie convexe 4 une languette 7 située sur
la génératrice longitudinale du demi cercle. Par superposition
de deux pièces, ce système autorise un crantage angulaire.

CONSOLIDATION :

Deux trous oblongs 8 et 10 perpendiculaires à la génératrice du
cercle et débouchant de part en part permettent le passage d'une
vis 14 et 15 et le maintien fixe dans une position choisie.

CONTREFORT :

En partie arrière supérieure 1 et 2 de cet ensemble se trouve une
encoche longitudinale 17 servant à recevoir une barrette 16.
Lorsque celle-ci est montée, elle empêche le glissement de l'enceinte
vers l'arrière.

## REVENDICATIONS

Deux formes identiques demi cylindriques, l'une
concave, l'autre convexe, ayant pour centre le
même plan qui, par superposition, conjugent un
double effet :

- de rotation,
- de crantage angulaire.

Fig 1

1/3

0022759

Fig 3

Fig 4

# RAPPORT DE RECHERCHE EUROPEENNE

Numéro de la demande

00 22 759

EP 80 87 0009

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | |
| | GB – A – 1 448 884 (MASAHIRO MASU-DA) <br><br> * Page 2, lignes 33-46; figure 4 * <br><br> -- <br><br> GB – A – 707 321 (SANKEY-SHELDON) <br><br> * Page 2, ligne 112 – page 3, ligne 4; figures 9, 10 * <br><br> -- | 1 <br><br><br><br><br><br> 1 | F 16 M 11/10 <br> H 04 R 1/02 <br> F 16 M 13/02 |
| A | FR – A – 509 934 (CONTINSOUZA) | | DOMAINES TECHNIQUES RECHERCHES (Int. Cl. 3) |
| A | DE – A – 2 144 736 (ISOPFON) | | |
| A | DE – A – 2 348 103 (PASCHKE) | | F 16 M <br> H 04 R <br> F 16 B <br> F 16 S <br> G 12 B <br> A 47 B |
| A | US – A – 3 679 022 (OHASHI) | | |
| A | US – A – 3 385 929 (MAGYAR) | | |
| A | GB – A – 1 521 230 (NIPPON GAKKI) | | |
| | ------ | | |

| CATEGORIE DES DOCUMENTS CITES |
|---|
| X: particulièrement pertinent |
| A: arrière-plan technologique |
| O: divulgation non-écrite |
| P: document intercalaire |
| T: théorie ou principe à la base de l'invention |
| E: demande faisant interférence |
| D: document cité dans la demande |
| L: document cité pour d'autres raisons |
| &: membre de la même famille, document correspondant |

Le présent rapport de recherche a été établi pour toutes les revendications

| Lieu de la recherche | Date d'achèvement de la recherche | Examinateur |
|---|---|---|
| La Haye | 03-10-1980 | NADELHOFFER |

OEB Form 1503.1 06.78